(19) Europäisches Patentamt
European Patent Office
Office européen des brevets

(11) **EP 4 310 057 A1**

(12) **EUROPEAN PATENT APPLICATION**

(43) Date of publication:
**24.01.2024 Bulletin 2024/04**

(21) Application number: **23185369.8**

(22) Date of filing: **13.07.2023**

(51) International Patent Classification (IPC):
**C01G 53/00** (2006.01)   **C01G 45/00** (2006.01)
**C01G 45/12** (2006.01)   **C01G 49/00** (2006.01)
**H01M 4/00** (2006.01)

(52) Cooperative Patent Classification (CPC):
**C01G 53/006; C01G 45/006; C01G 45/1228;**
**C01G 49/009; C01G 53/50; H01M 4/00;**
C01P 2002/72; C01P 2004/61; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.07.2022   CN 202210841494**

(71) Applicant: **Guizhou Zhenhua E-CHEM Inc.**
**Guiyang City, Guizhou 550014 (CN)**

(72) Inventors:
• **ZHOU, Chaoyi**
**Guiyang City, 550014 (CN)**

• **XIANG, Qianxin**
**Guiyang City, 550014 (CN)**
• **LI, Jinkai**
**Guiyang City, 550014 (CN)**
• **WU, Yang**
**Guiyang City, 550014 (CN)**
• **WU, Xingping**
**Guiyang City, 550014 (CN)**

(74) Representative: **Dehns**
**St. Bride's House**
**10 Salisbury Square**
**London EC4Y 8JD (GB)**

(54) **A MONO-CRYSTALLINE CATHODE MATERIAL FOR SODIUM-ION BATTERY AND PREPARATION METHOD AND BATTERY THEREOF**

(57)    The present invention related to the technical field of sodium ion batteries, and particularly related to a mono-crystalline cathode material for sodium-ion battery and a preparation method and battery thereof. The mono-crystalline cathode material for sodium-ion battery has a chemical composition formula of $Na_{1+a}Ni_{1-x-y-z}Mn_xFe_yM_zO_2$, wherein $-0.40<a<0.25$, $0.08\leq x\leq 0.5$, $0.05\leq y\leq 0.5$, $0\leq z\leq 0.26$, the M is one or a combination of two or more selected from the group consisting of Ti, Zn, Co, Mn, Al, Zr, Y, Ca, Li, Rb, Cs, W, Ce, Mo, Ba, Mg, Ta, Nb, V, Sc, Sr, B, F, P or Cu elements. The mono-crystalline cathode material for sodium-ion battery has a specific chemical composition, a mono crystal morphology and good structural stability and integrity. Particle fragmentation can not be produced in the cyclic process, and meanwhile, the cyclic stability of the sodium-ion battery can be improved.

EP 4 310 057 A1

**Description**

**Technical Field**

The present invention related to the technical field of sodium-ion batteries, and particularly relates to a mono-crystalline cathode material for sodium-ion battery and preparation method and battery thereof.

**Background Art**

With the competition of lithium ion batteries becoming increasingly fierce, coupled with the supply-demand relationship and the limitation of resources, the price of lithium salt is rapidly rising, so that the sodium-ion battery with cost advantage has gradually become a research hotspot in large enterprises and universities. The working principle of sodium-ion battery is the same as that of lithium ion battery, but compared with that of lithium ion battery, the ionic radius of sodium ion is larger and the diffusion kinetics is slower, so that sodium ion has certain disadvantages in energy density and cycle performance.

After nearly ten years of extensive research, sodium-ion batteries have formed products mainly based on transition metal oxides, prussian blue, polyanionic phosphate and other systems. in which transition metal oxides with relatively high specific capacity, have been favored, but poor cycle performance and low energy density have been an important factor affecting the use of cathode materials for sodium-ion batteries.

At present, there are two kinds of transition metal oxides on the market, one is a nickel-manganese-iron-copper-based oxide containing copper element, and the other is a nickel-iron-manganese-based oxide. Regardless of any one of the two, changing the different ratios of nickel, iron, manganese and copper elements leads to cathode materials for sodium ion batteries with different properties. The stability of the material in contact with the electrolyte also changes due to the different ratios of the elements. However, the factors influencing the cycle life of cathode materials for sodium-ion battery include: 1. reconstitution of surface crystal structure during cycling; and 2. agglomerated particles breaking up during cycling due to anisotropic volume expansion. The results show that the local current density increases due to the connection structure between particles and particles, which results in great stress and affects the cycle performance of the materials. At the same time, there is a state of charge inconsistency between various parts inside the particles, which affects the electrochemical performance of the electrode.

In addition, when the amount of sodium removal from the cathode material of a sodium-ion battery is large, the structure becomes very fragile, the active metal and oxygen in the crystal lattice shift, reaching a certain high temperature and high pressure, the atomic rearrangement and reconstruction gradually intensifies, and the grain volume and phase change greatly. On the other hand, when the cathode material is desalted,,its oxidation property is enhanced, and it is very easy to have chemical and electrochemical interaction with the electrolyte, resulting in easy deoxidation of the material and dissolution of transition metals. Particularly under high voltage, the electrolyte will be oxidized to generate $H^+$, which increases the acidity of the electrolyte, thus the surface film of the electrode material is damaged by HF, and the composition and structure of the interface are further changed, seriously affecting the electrochemical performance and cycle performance of the material.

**Summary of the Invention**

The technical problem to be solved by the present invention is that a mono-crystalline cathode material for sodium-ion battery is provided to improve the cycle performance of the sodium-ion battery.

In view of the above-mentioned technical problems, the inventors of the present application have intensively studied to obtain a mono-crystalline cathode material for sodium-ion battery, wherein the material has a complete structure and good processability, and there will be no particle fragmentation during the circulation, effectively reducing the generation of a new interface due to particle fragmentation. The crystal structure of the material is stabilized. It can be used in sodium-ion batteries, especially in power sodium ion battery to effectively improve the high-temperature and high-voltage cycle performance, .

Technical solutions of the invention:

The present invention provides a mono-crystalline cathode material for sodium-ion battery, wherein the mono-crystalline cathode material for sodium-ion battery has a chemical composition formula of $Na_{1+a}Ni_{1-x-y-z}Mn_xFe_yM_zO_2$, wherein $-0.40<a<0.25$, $0.08\leq x\leq 0.5$, $0.05\leq y\leq 0.5$, $0\leq z<0.26$; the M is one or a combination of two or more selected from the group consisting of Ti, Zn, Co, Mn, Al, Zr, Y, Ca, Li, Rb, Cs, W, Ce, Mo, Ba, Mg, Ta, Nb, V, Sc, Sr, B, F, P or Cu elements.

Preferably, $-0.33\leq a\leq 0$, $0.10\leq x\leq 0.5$, $0.15\leq y\leq 0.5$.

Preferably, the M is one or a combination of two or more selected from the group consisting of Zn, Ti, Co, Al, Zr, Y, Ca, Li, Rb, Cs, W, Ce, Mo, Ba, Mg, Ta, Nb, V, Sc, Sr, B, F, P or Cu, preferably the M is one or a combination of two or more selected from the group consisting of Zn, Al, B, Ti, Ca, Y, Mg, Nb, Zr or Cu; preferably, $0 \leq z \leq 0.16$.

Preferably, a microscopic morphology of the mono-crystalline cathode material for sodium-ion battery under a scanning electron microscope is a mono crystal morphology; preferably, particles of the mono crystal morphology is one or a combination of two or more selected from the group consisting of spherical, spheroidal, polygonal or lamellar in shape.

Preferably, the mono-crystalline cathode material for sodium-ion battery has a powder X-ray diffraction spectrum (XRD) in which a full width at half maximum (FWHM)(110) of a (110) diffraction peak having a diffraction angle 2 θ of around 64.9° ranges 0.06-0.35.

Preferably, the mono-crystalline cathode material for sodium-ion battery has a powder compacted density of 2.8-4.2 g/cm$^3$ at a pressure of 7000-9000 kg.

Preferably, the mono-crystalline cathode material for sodium-ion battery has a moisture mass content of less than 3000 ppm, preferably less than 2800 ppm, more preferably less than 2500 ppm.

Preferably, the mono-crystalline cathode material for sodium-ion battery has a pH within 13.1, preferably within 13.0.

Preferably, the mono-crystalline cathode material for sodium-ion battery has a specific surface area of 0.35-1.2m$^2$/g.

Preferably, the mono-crystalline cathode material for sodium-ion battery has a particle size $D_V50$ of 2.0-16.0μm, preferably 4.0-13.0μm.

The present invention further provides a preparation method of the mono-crystalline cathode material for sodium-ion battery, which comprise the following steps: mixing raw materials comprising a sodium source compound, an iron source compound and a manganese source compound, and adding a nickel source compound and/or an M source compound according to needs, sintering and crushing to obtain the mono-crystalline cathode material for sodium-ion battery.

Preferably, a temperature of the sintering is 860-990°C, preferably 880-980°C; preferably, a constant temperature time is 6-40 hours.

Preferably, the crushing pressure is 0.1-1MPa.

Preferably, the sodium source compound is one or a combination of two or more selected from the group consisting of sodium carbonate, sodium formate, sodium hydroxide, sodium acetate, sodium chloride and sodium fluoride.

Preferably, the manganese source compound is one or a combination of two or more selected from the group consisting of manganese trioxide, manganese tetroxide, manganese oxide, manganese carbonate, manganese oxalate, manganese sulfate, manganese acetate, manganese chloride and manganese nitrate.

Preferably, the nickel source compound is one or a combination of two or more selected from the group consisting of nickel carbonate, nickel oxalate, nickel sulfate, nickel acetate, nickel chloride and nickel nitrate.

Preferably, the iron source compound is one or a combination of two or more selected from the group consisting of ferric oxide, ferrous oxalate, ferric sulfate, ferric acetate, ferrous sulfate, ferrous acetate, ferrous nitrate and ferric nitrate.

Preferably, the M source compound comprises an M element-containing oxide and/or salt; preferably, the M source compound is one or a combination of two or more selected from the group consisting of calcium oxide, calcium hydroxide, boron trioxide, boric acid, niobium pentoxide, aluminum oxide, aluminum nitrate, aluminum acetate, titanium oxide, metatitanic acid, magnesium oxide, magnesium acetate, copper oxide, yttrium trioxide, zirconium oxide, zirconium oxychloride, zirconium acetate, sodium fluoride, lithium fluoride, zinc oxide, and copper sulfate.

The present invention also provides a mono-crystalline cathode material for sodium-ion battery prepared by the above-mentioned preparation method.

The present invention also provides a positive electrode for a sodium ion battery, an active material of which is the mono-crystalline cathode material for sodium-ion battery described above.

The present invention also provides a sodium ion battery comprising the positive electrode for a sodium ion battery described above.

The present invention also provides an application of the above-mentioned mono-crystalline cathode material for sodium-ion batter or the above-mentioned positive electrode for a sodium ion battery or the above-mentioned sodium ion battery in solar power generation, wind power generation, smart grids, distributed power stations, household energy storage batteries, low-end two-wheeled vehicle batteries or low energy density power batteries.

The invention has the following beneficial effects.

The mono-crystalline cathode material for sodium-ion battery according to the present invention has a specific chemical composition and a mono crystal morphology, so that the cathode material for a sodium ion battery has good structural stability and does not undergo significant structural change due to frequent de-intercalation of sodium ions during charge and discharge of the sodium ion battery. In addition, the material has complete structure and good processability, and there will be no particle fragmentation during circulation, and effectively preventing the direct contact of the material surface with the electrolyte, especially with HF in the electrolyte. It prevents the occurrence of side reactions, and improves the circulation stability of the sodium-ion battery.

## Brief Description of the Drawings

Fig. 1 is an SEM diagram of a mono-crystalline cathode material for sodium-ion battery prepared in example 1 (magnification: 5000 times);

Fig. 2 is an SEM diagram of a mono-crystalline cathode material for sodium-ion battery prepared in example 2 (magnification: 5000 times);

Fig. 3 is an SEM diagram of a mono-crystalline cathode material for sodium-ion battery prepared in example 3 (magnification: 5000 times);

Fig. 4 is an SEM diagram of a mono-crystalline cathode material for sodium-ion battery prepared in example 4 (magnification: 5000 times);

Fig. 5 is an SEM diagram of a mono-crystalline cathode material for sodium-ion battery prepared in example 5 (magnification: 5000 times);

Fig. 6 is an SEM diagram of a mono-crystalline cathode material for sodium-ion battery prepared in example 6 (magnification: 5000 times);

Fig. 7 is an SEM diagram of a pole piece containing a mono-crystalline cathode material for sodium-ion battery prepared in example 1 (magnification: 5000 times);

Fig. 8 is an SEM diagram of a pole piece containing a mono-crystalline cathode material for sodium-ion battery prepared in example 2 (magnification: 5000 times);

Fig. 9 is an SEM diagram of a pole piece containing a mono-crystalline cathode material for sodium-ion battery prepared in example 3 (magnification: 5000 times);

Fig. 10 is an SEM diagram of a pole piece containing a mono-crystalline cathode material for sodium-ion battery prepared in example 4 (magnification: 5000 times);

Fig. 11 is an SEM diagram of a pole piece containing a mono-crystalline cathode material for sodium-ion battery prepared in example 5 (magnification: 5000 times);

Fig. 12 is an SEM diagram of a pole piece containing a mono-crystalline cathode material for sodium-ion battery prepared in example 6 (magnification: 5000 times);

Fig. 13 is an SEM diagram of a mono-crystalline cathode material for sodium-ion battery prepared in comparative example 1 (magnification: 5000 times);

Fig. 14 is an SEM diagram of a pole piece containing a mono-crystalline cathode material for sodium-ion battery prepared in comparative example 1 (magnification: 5000 times);

Fig. 15 is a graph of the strike cycle of examples 1-6 and comparative example 1;

Fig. 16 is an SEM diagram of the positive pole piece after 50 cycles of BA-C1 battery (magnification: 5000 times).

## Detailed Description of the Invention

In order to make the objects, technical solutions and technical effects of the examples of the present invention clearer, the technical solutions of the examples of the present invention are described clearly and completely. The examples described below are some, but not all examples of the present invention. In combination with the examples of the present invention, all other examples obtained by a person of ordinary skill in the art without inventive effort fall within the scope of the present invention.

The $D_v50$ of the present invention refers to the particle size corresponding to 50% in quantity amount of the volume cumulative particle size distribution in a sample.

In order to improve the cycle performance of the sodium ion battery, the cathode material for sodium-ion battery is prepared into mono crystal particles in the present invention. On one hand, the structural stability of the material is improved, the structural change is effectively suppressed, and the reversibility of the material is enhanced. On the other hand, it effectively avoids direct contact between the materials and the electrolyte, especially the HF in the electrolyte, thereby preventing the occurrence of side reactions, inhibiting the crystal phase transition of the material, and improving the cycling stability of the material.

In an embodiment of the present invention, the present invention provides a mono-crystalline cathode material for sodium-ion battery, wherein the mono-crystalline cathode material for sodium-ion battery has a chemical composition formula of $Na_{1+a}Ni_{1-x-y-z}Mn_xFe_yM_zO_2$, wherein $-0.40 \le a \le 0.25$, $0.08 \le x \le 0.5$, $0.05 \le y \le 0.5$, $0 \le z < 0.26$;

the M is one or a combination of two or more selected from the group consisting of Ti, Zn, Co, Mn, Al, Zr, Y, Ca, Li, Rb, Cs, W, Ce, Mo, Ba, Mg, Ta, Nb, V, Sc, Sr, B, F, P or Cu elements.

In a preferred example of the present invention, in the above-mentioned chemical formula, $-0.33 \le a \le 0$, $0.1 \le x \le 0.5$, $0.15 \le y \le 0.5$.

In a preferred embodiment of the present invention, the M is one or a combination of two or more selected from the group consisting of Zn, Ti, Co, Al, Zr, Y, Ca, Li, Rb, Cs, W, Ce, Mo, Ba, Mg, Ta, Nb, V, Sc, Sr, B, F, P or Cu, preferably the M is one or a combination of two or more selected from the group consisting of Zn, Al, B, Ti, Ca, Y, Mg, Nb, Zr, or Cu, more preferably the M is Zn; preferably, $0 \leq z \leq 0.16$.

In the invention, a microscopic morphology of the mono-crystalline cathode material for sodium-ion battery under a scanning electron microscope is a mono crystal morphology; particles of the mono crystal morphology is one or a combination of two or more selected from the group consisting of spherical, spheroidal, polygonal or lamellar in shape.

In the invention, the mono-crystalline cathode material for sodium-ion battery has a powder X-ray diffraction spectrum (XRD) in which a full width at half maximum (FWHM)(110) of a (110) diffraction peak having a diffraction angle $2\theta$ of around 64.9° (it is around the diffraction angle X° appearing in the present invention, meaning that the diffraction angle is X° ± 1°, such as 64.9° ± 1°, i.e., 63.9°-65.9°) ranges 0.06-0.35.

In the invention, the mono-crystalline cathode material for sodium-ion battery has a powder compacted density of 2.8-4.2g/cm$^3$ at a pressure of 7000-9000kg.

In the invention, the mono-crystalline cathode material for sodium-ion battery has a specific surface area of 0.35-1.2m$^2$/g.

In the invention, the mono-crystalline cathode material for sodium-ion battery has a particle size $D_V50$ of 2.00-16.0 μm, preferably 4.0-13.0 μm.

The specific surface area (BET) of the mono-crystalline cathode material for sodium-ion battery of the invention is within a reasonable range, and the Intermolecular force on the surface of the material is in a relatively balanced position, so that it is not easy to self agglomerate even in an environment with relatively high humidity.

The present invention further provides a preparation method of a mono-crystalline cathode material for sodium-ion battery, comprising the following steps of: mixing raw materials comprising a sodium source compound, an iron source compound and a manganese source compound, and adding a nickel source compound and/or an M source compound according to needs, sintering and crushing to obtain the mono-crystalline cathode material for sodium-ion battery.

In the above-mentioned preparation method, the sintering is performed at a temperature of 860-990°C for 6-40 hours, preferably, the temperature of the sintering is 880-980°C; the atmosphere used for sintering is air, oxygen or a mixed gas of air and oxygen;

In the above-mentioned preparation method, the crushing pressure is 0.1-1MPa.

In the above-mentioned preparation method, the sodium source compound includes a sodium element-containing salt and/or hydroxide, for example, including one or a combination of two or more selected from the group consisting of sodium carbonate, sodium formate, sodium hydroxide, sodium acetate, sodium chloride, and sodium fluoride.

In the above-mentioned preparation method, the manganese source compound includes a manganese element-containing oxide, hydroxide, or manganese-containing salt, for example, including one or a combination of two or more selected from the group consisting of manganese trioxide, manganese tetroxide, manganese oxide, manganese carbonate, manganese oxalate, manganese sulfate, manganese acetate, manganese chloride, and manganese nitrate.

In the above-mentioned preparation method, the nickel source compound includes a nickel element-containing oxide, hydroxide or a nickel-containing salt, for example, including one or a combination of two or more selected from the group consisting of nickel carbonate, nickel oxalate, nickel sulfate, nickel acetate, nickel chloride and nickel nitrate.

In the above-mentioned preparation method, the iron source compound includes an iron element-containing oxide, hydroxide or an iron-containing salt, for example, including one or a combination of two or more selected from the group consisting of ferric oxide, ferrous oxalate, ferric sulfate, ferric acetate, ferrous sulfate, ferrous acetate, ferrous nitrate and ferric nitrate.

In the above-mentioned preparation method, the M source compound comprises an M element-containing oxide and/or salt, for example, including one or a combination of two or more selected from the group consisting of calcium oxide, calcium hydroxide, boron trioxide, boric acid, niobium pentoxide, aluminum oxide, aluminum nitrate, aluminum acetate, titanium oxide, metatitanic acid, magnesium oxide, magnesium acetate, copper oxide, yttrium trioxide, zirconium oxide, zirconium oxychloride, zirconium acetate, sodium fluoride, lithium fluoride, zinc oxide, and copper sulfate.

The present invention also provides a positive electrode for a sodium ion battery, an active material of which is the mono-crystalline cathode material for sodium ion battery described above.

The present invention also provides a sodium ion battery comprising the positive electrode for a sodium ion battery described above.

The sodium ion battery of the present invention further comprises a negative electrode, an electrolyte comprising a sodium salt, a separator, and an aluminum plastic film. Specifically, wherein the positive is made of a material including a positive current collector and a positive active material coated on the positive current collector, a binder, and a conductive aid, etc. The positive active material is the mono-crystalline cathode material for sodium-ion battery of the present invention. The negative electrode is a metal sodium sheet or is made of a material comprising a current collector and an negative active substance coated on the current collector, and a binder, a conductive aid, etc. The separator is a PP/PE thin film conventionally used in the art for separating a positive electrode and a negative electrode from each other. The aluminum-plastic film is an inclusion body of a positive electrode, a negative electrode, a separator, and an electrolyte.

The adhesive in the present invention is mainly used for improving adhesion characteristics between positive active material particles and each other, as well as between positive active material particles and a current collector. The adhesive of the present invention may be selected from conventional adhesives commercially available in the art. In particular, the adhesive may be one or a combination of two or more selected from the group consisting of polyvinyl alcohol, carboxymethyl cellulose, hydroxypropyl cellulose, polyvinyl chloride, carboxylated polyvinyl chloride, polyvinyl fluoride, ethylene oxide containing polymers, polyvinyl pyrrolidone, polyurethane, polytetrafluoro ethylene, polyvinylidene 1,1-difluoride, polyethylene, polypropylene, styrene-butadiene rubber, acrylated styrene-butadiene rubber, epoxy or nylon.

The conductive aid of the present invention may be selected from conventional conductive aids commercially available in the art. In particular, the conductive aid may be one or a combination of two or more selected from the group consisting of a carbon-based material (e.g. natural graphite, artificial graphite, carbon black, acetylene black, ketjen black, or carbon fiber), a metal-based material (e.g. metal powder or metal fibers including copper, nickel, aluminum, silver, etc.) or a conductive polymer (e.g. a polyphenylene derivative).

The present invention also provides an application of the above-mentioned mono-crystalline cathode material for sodium ion battery or the above-mentioned electrode for a sodium ion battery or the above-mentioned sodium ion battery in solar power generation, wind power generation, smart grids, distributed power stations, household energy storage batteries, low-end two-wheeled vehicle batteries or low energy density power batteries.

Benefits of the present invention are further illustrated by the following specific examples.

The raw materials or reagents used in the present invention are commercially available from mainstream manufacturers. Those in which manufacturers are not specified or concentrations not specified are analytically pure raw materials or reagents that can be conventionally obtained, provided that they can perform the intended function, without particular limitation. The instruments and equipments used in this example are all purchased from major commercial manufacturers, and are not particularly limited as long as they can perform the intended functions. Where specific techniques or conditions are not specified in the examples, they are performed according to techniques or conditions described in the literature in the art or according to the product manual.

The materials and instruments used in the following examples, comparative examples, are listed in Table 1:

Table 1 Raw materials used in examples and comparative examples

| Name of the agent | Grade | Model | Vendor |
|---|---|---|---|
| Sodium carbonate | / | / | Guizhou Golden Molar Chemical Co., Ltd. |
| Manganese carbonate | / | / | Shandong Pule New Material Co., Ltd. |
| Nickel carbonate | / | / | Baoding Fairsky Industrial Co., Ltd. |
| Ferric oxide | / | / | Hengshengyuan New Material Technology Co., Ltd. |
| Boric acid | / | / | Guizhou Tianlihe Chemical Co., Ltd. |
| Alumina | / | / | Shijiazhuang Jinghuang Technology Co., Ltd. |
| Cupric oxide | / | / | Guizhou Tianlihe Chemical Co., Ltd. |
| Titanium oxide | / | / | Nanjing Tansail New Material Co., Ltd. |
| Manganese sesquioxide | / | / | Haotian Nanotechnology (Shanghai) Co., Ltd. |
| Nickel oxalate | / | / | Zhengzhou Lanzhituo Chemical Products Co., Ltd. |
| Ferrous oxalate | / | / | Guizhou Tianlihe Chemical Co., Ltd. |
| Zinc oxide | / | / | Guizhou Tianlihe Chemical Co., Ltd. |
| Yttrium oxide | | | Guizhou Tianlihe Chemical Co., Ltd. |
| Zirconium oxide | | | Guizhou Tianlihe Chemical Co., Ltd. |
| Calcium oxide | | | Guizhou Tianlihe Chemical Co., Ltd. |
| $Ni_{0.27}Mn_{0.38}Fe_{0.35}(OH)_2$ | | | |

Table 2 Equipment information used in the examples

| Name of the equipment | Model | Vendor |
|---|---|---|
| Laser particle size analyzer | MSU2000 | British Malvern Instruments Co., Ltd. |
| Micromeritics automatic specific surface and porosity analyzer | TriStar II 3020 | Micromeritics |
| Powder ray diffractometer | X'Pert PRO MPD | PANalytical |
| Inductively coupled plasma emission spectrometer | iCAP-7400 | Thermo Electric |
| Battery test system | CT-4008-5V50mA-164 | Shenzhen Neware Technology Co., Ltd. |
| High-efficiency vacuum drying box | KP-BAK-03E-02 | Dongguan Kerui Electromechanical Equipment Co., Ltd. |
| Jet mill | MX-50 | Yixing City Juneng Superfines Equipment Co., Ltd. |
| Muffle furnace | JZ-24-1200 | Shanghai Jingzhao Machinery Equipment Co., Ltd. |

**Example 1**

According to an elemental molar ratio of Na:Mn:Ni:Fe:B=0.92:0.34:0.30:0.35:0.01 and a total weight of 1.63kg, corresponding weights of sodium carbonate, manganese carbonate, nickel carbonate, ferric oxide and boric acid were respectively weighed, and then added into an ultra-high speed multi-functional mixer to rotate at a speed of 3300 r/min, and mixed for 20 min. The uniformly mixed material was placed in a muffle furnace under an air atmosphere at a constant temperature of 885°C for 18 hours, then naturally cooled, and crushed with a jet mill at a crushing pressure of 0.60MPa to obtain a mono-crystalline cathode material for sodium-ion battery C1;

The above-mentioned cathode materials were characterized and analyzed according to the following method:

1) Component analysis

Composition of the above-mentioned cathode materials were analysed using ICP;

(1) Sample pretreatment

0.2000-0.2100 (accurate to 0.001g) sample was weighed into a 100mL quartz beaker, 10mL aqua regia (1:1) was added into the quartz beaker along the cup wall. The quarts beaker was covered with a watch glass, and heated at 180°C for 30 min. All the solution was transferred to 50 mL of capacity and shaked well with deionized water at constant volume; 1mL of solution was pipetted from the shaken 50 mL of volumetric flask into a 100 mL of volumetric flask, SmL (25%) of nitric acid was added into the volumetric flask, diluted with deionized water to constant volume; (2) Component analysis testing was performed using the standard curve method.

The chemical formula of the mono-crystalline cathode material for sodium-ion battery C1 measured according to the above-mentioned method is $Na_{0.92}Ni_{0.30}Mn_{0.34}Fe_{0.35}B_{0.01}O_2$。

2) Specific surface area

According to the national standard GB/T19587-2006 Gas adsorption-BET method , a specific surface area of solid materials was determined.

Analytical equipment: Tristar II3020 automatic specific surface and porosity analyzer;

Test Parameters: adsorbate $N_2$, 99.999%, coolant liquid nitrogen, P0 actual measurement, volume measurement mode, adsorption pressure deviation of 0.05mmHg, equilibrium time of 5s, relative pressure point selection P/P0: 0.05; 0.1; 0.15; 0.2; 0.25; 0.30;

Sample pretreatment; the empty sample tube+stopper mass was weighed and recorded as M1, 3.8-4.2g was weighed, 3/8 inch of 9.5mm ratio meter tube with bulb was added, FlowPrep 060 degassing station was used to set 200°C, purging was performed with inert gas to heat and degas for 0.5h, the sample tube+stopper+sample mass cooled to room temperature was removed and recorded as M2,the sample mass M = M2-M1, and test was performed on the machine to record the BET value. The results are shown in Table 3.

3) Particle size

Determination was made according to the national standard GB/T19077-2016 particle size distribution laser diffraction method, and the results are shown in Table 3.

Test equipment: Malvern, Master Size 2000 Laser Particle Size Analyzer.

Test steps: 1g of powder was weighed. The powder were added into 60ml of pure water, and externally sonicated for 5min. The sample was poured into the sampler, and then the test was conducted,and the test data was recorded. Conditions tested: the test principle is (light scattering) Mie theory, the detection angle is 0-135 °, the external ultrasonic intensity is 40KHz, 180w, the particle refractive index is 1.692, the particle absorption rate is 1, the sample test time is 6s, the background test snap number is 6,000 times, and the obscuration is 8-12%.

4) pH value

A PHSJ-3F lightning magnetic pH meter is used to make measurement, and the specific method is as follows: 5g $\pm$ 0.05g sample accurately weighed was put into the beaker. 10% suspension were prepared by adding deionized water into the beaker, wherein the mass ratio of material to deionized water is 1: 9, and then the magnet was put into it. The beaker was placed on the tray of magnetic stirrer. Magnetic stirrer was started to work with speed of of 880r/min. After 5 min, qualitative filter paper and funnel were used to filter the mixed solution, which was then put into a thermostatic water bath set at 25°C, and thermostatic filtration was perform at 20 $\pm$ 5min; the electrode was washed with the sample solution. After washing, the electrode and temperature sensor were inserted into the sample solution. When the reading was stable and the temperature shows 25°C, the pH value was recorded. The results are shown in Table 3.

5) XRD Test

The mono-crystalline cathode material for sodium-ion battery was tested for XRD using an X 'Pert PRO MPD analyzer.

Test principle: the Bragg equation reflects the relationship between the direction of the diffraction lines and the crystal structure. The diffraction must satisfy the Bragg formula: $2d\sin\theta=n\lambda$ (d: interplanar spacing; $\theta$: Bragg angle; $\lambda$: the wavelength of the X-rays; n: reflection order). When X-rays irradiate on a sample, the scattered X-rays of the atoms in the crystal interfere produce strong X-ray diffraction lines in a particular direction. When X-rays irradiate the sample at different angles, diffraction occurs at different crystal planes, and the detector will receive the number of diffracted photons reflected from the crystal plane, thereby obtaining a spectrum of angle versus intensity.

Test conditions: the light pipe is a Cu target, the wavelength is 1.54060, and a Be window is used; Incident light path: cable slit of 0.04rad, divergence slit of 1/2°, shading plate of 10mm, anti-scatter slit of 1°; diffraction light path: anti-scatter slit of 8.0mm, cable slit of 0.04rad, large Ni filter; scan range of 10-90°, scan step size of 0.013°, dwell time of 30.6s per step, voltage of 40kV, current of 40mA.

Powder sample preparation: the powder was put into the groove of a glass slide by a clean sampling spoon (for a large-particle sample, it was necessary to grind it into powder < 50 $\mu$m). One side (> 20 mm) of scraping blade was placed against the surface of glass slide, and the other end was slightly lifted (at an included angle < 10°). The surface of powder sample was scraped flatly by the edge of scraping blade, and scraped flatly again when the glass slide rotated by 90°. It was repeatedly scraped in two directions for several times until the surface of sample was free from texture. After removing the excess powder around the glass slide, the glass slide was placed into a powder ray diffraction analyzer.

Sample analysis: the XRD graph is refined using the software High-Score Plus, including firstly determining the background, selecting a peak to confirm the peak, repeating the fitting, recording the Williamson-Hall plot to calculate the grain size, selecting a corresponding phase to perform the matching and unit cell refinement, and recording unit cell parameters. The results are shown in Table 3.

6) Moisture

According to GB/T 11133-2015 Karl Fischer coulometric titration, 899 Coulometer + 885 Compact Oven SC coulometric water content determination equipment is used to make measurement, including weighing 0.5 - 0.8g sample with accuracy of 0.0001g using water content bottle, extracting 400s in the air flow rate of 50 - 60ml/min with heat temperature of 170°C. The start drift is greater than or equal to 10$\mu$g/min. The stop drift is 20$\mu$g/min. The test result is kept by one decimal place. The results are shown in Table 3.

7) Powder compacted density

(1) the circular mould is placed on the working table of electronic pressure testing machine, the pressure was slowly manually increased to 1000kg , and then the displacement and deformation were cleared.

(2) Taking (5.0000 ± 0.1000) powder weighed into a circular mould, gently shaken flat, and then placing the upper gasket of the mould on the sample. Note that it is necessary for both gaskets to face the sample in a non-tangential plane, so as to prevent the sample from overflowing.

(3) After the completion of sample loading, the mold was placed on the working surface of electronic pressure testing machine, the program was edit to to 8000kg at the speed of 5mm/min, constant pressure was kept for 30s, and then the pressure was released to zero.

(4) recording the sample pressure when the sample is at constant pressure to 8000±10kg (about 15-25s after the elevated pressure reached 8000kg), and reading the height of sample with accurating to 0.001cm.

(5) manually descending the working table of electronic pressure testing machine, and taking out the sample by extractor.

(6) taking out the sample, cleaning the inner part of the sample mould with dust-free paper dipped with alcohol, ensuring the inner part of the mould is clean, and finishing the experiment.

(7) calculating according to the following formula, and the results are shown in Table 3.

$$\text{compacted density } \rho = \frac{\text{mass of sample m}}{3.14 * 1.0^2 * (\text{height of sample h})}$$

In the formula:

m--mass of sample, g;
1.0--the radius of circular mould, cm;
h--height of sample, cm.

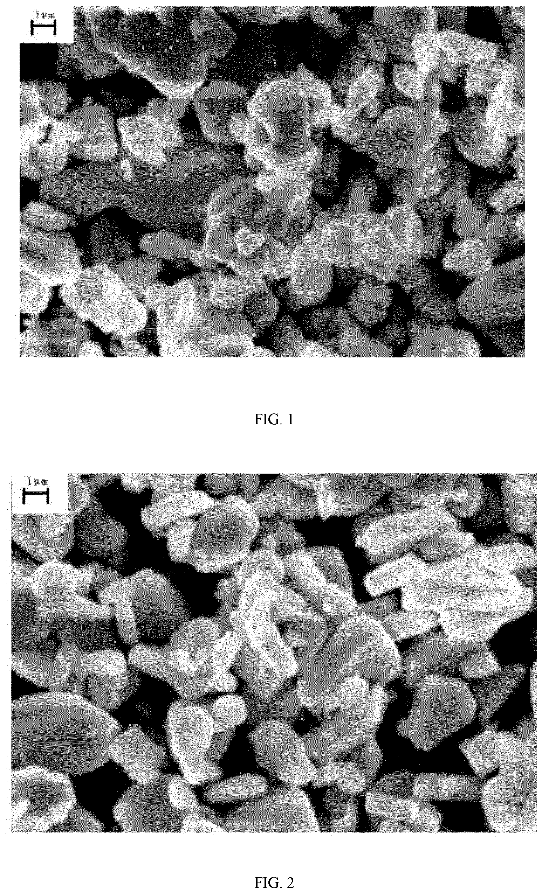

Fig. 1 is a SEM diagram of a mono-crystalline cathode material for sodium-ion battery of Example 1, and it can be seen from Fig. 1 that the material is a mono crystal particle and has a polygonal shape and a lamellar shape.

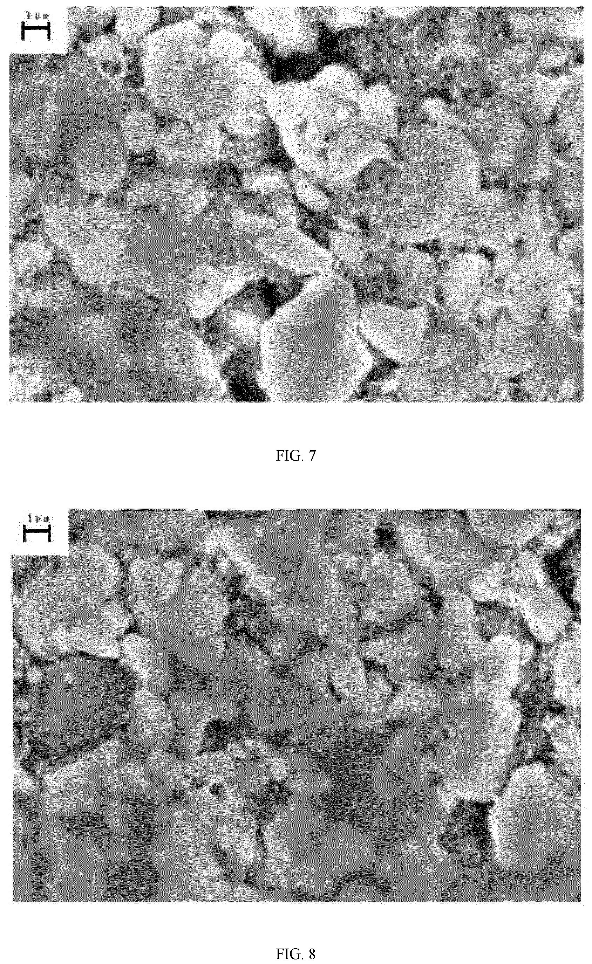

The mono-crystalline cathode material for sodium-ion battery of example 1 was thoroughly mixed with an adhesive of polyvinylidene fluoride (PVDF) and conductive carbon black (S. P) in a weight ratio of 90:5:5, stirred to form a uniform slurry, coated on an aluminium foil current collector, dried and cold pressed to form a pole piece. The pole piece was taken for an SEM test, as shown in Fig. 7, and it can be seen from Fig. 7 that the material is still mono crystal particles, and there is no crack on the surface of the material particles.

## Example 2

According to an elemental molar ratio of Na:Mn:Ni:Fe:Cu:Zn=0.81:0.31:0.25:0.28:0.12:0.04 and a total weight of 1.49kg, sodium carbonate, manganese carbonate, nickel carbonate, ferric oxide, copper oxide, and zinc oxide were respectively weighed, and then added into an ultra-high speed multi-functional mixer to mix for 15 min at a rotational speed of 4000r/min. The uniformly mixed material was placed in a muffle furnace under an air atmosphere at a constant temperature of 890°C for 16 hours, then naturally cooled, and crushed with a jet mill at a crushing pressure of 0.59MPa to obtain a mono-crystalline cathode material for sodium-ion battery C2;

The chemical formula of mono-crystalline cathode material for sodium-ion battery C2 measured according to the composition analysis method in example 1 is $Na_{0.81}Ni_{0.25}Mn_{0.31}Fe_{0.28}Cu_{0.12}Zn_{0.04}O_2$.

The cathode material was tested by the method of example 1, and the test results are shown in Table 3.

Fig. 2 is an SEM diagram of a mono-crystalline cathode material for sodium-ion battery of example 2, and it can be seen from Fig. 2 that the material is a mono crystal particle and has a polygonal shape and a lamellar shape.

The mono-crystalline cathode material for sodium-ion battery of example 2 was thoroughly mixed with an adhesive of polyvinylidene fluoride (PVDF) and conductive carbon black (S. P) in a weight ratio of 90:5:5, stirred to form a uniform slurry, coated on an aluminium foil current collector, dried and cold pressed to form a pole piece. The pole piece was taken for an SEM test, as shown in Fig. 8, and it can be seen from Fig. 8 that the material is still mono crystal particles, and there is no crack on the surface of the material particles.

**Example 3**

According to an elemental molar ratio of Na:Mn:Ni:Fe:Zn:Al=0.81:0.32:0.20:0.33:0.145:0.005 and a total weight of 1.75 kg, sodium carbonate, manganese trioxide, nickel oxalate, ferrous oxalate and zinc oxide and alumina were respectively weighed and then added into an ultra-high speed multi-functional mixer to mix 15min at a rotational speed of 4000 r/min. The uniformly mixed material was placed in a muffle furnace under an air atmosphere at a constant temperature of 960°C for 10 hours, then naturally cooled, and crushed with a jet mill at a crushing pressure of 0.62MPa to obtain a mono-crystalline cathode material for sodium-ion battery C3;

The chemical formula of the mono-crystalline cathode material for sodium-ion battery C3 measured according to the composition analysis method in example 1 is $Na_{0.81}Ni_{0.2}Mn_{0.32}Fe_{0.33}Zn_{0.145}Al_{0.005}O_2$.

The cathode material was tested by the method of example 1, and the test results are shown in Table 3.

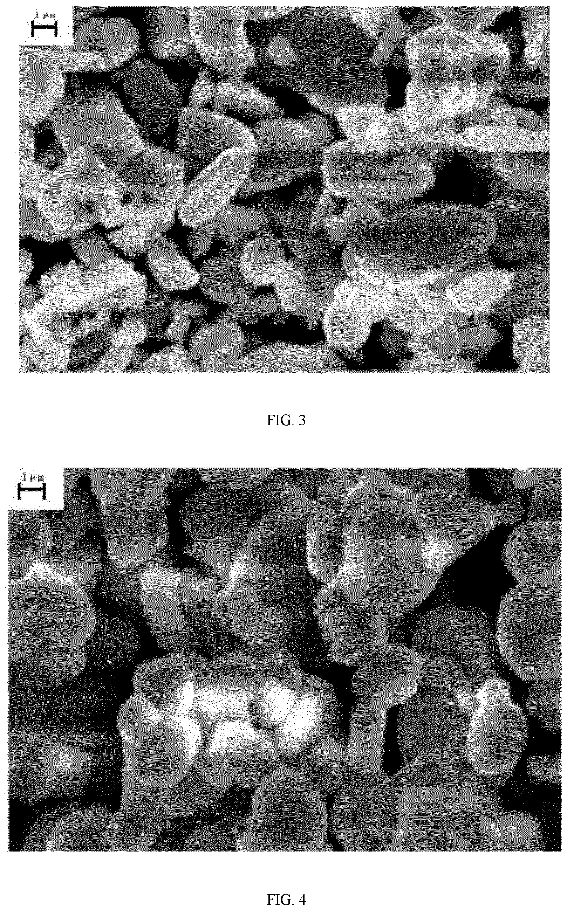

Fig. 3 is an SEM diagram of a mono-crystalline cathode material for sodium-ion battery of example 3, and it can be seen from Fig. 3 that the material is a mono crystal particle and has a polygonal shape and a lamellar shape.

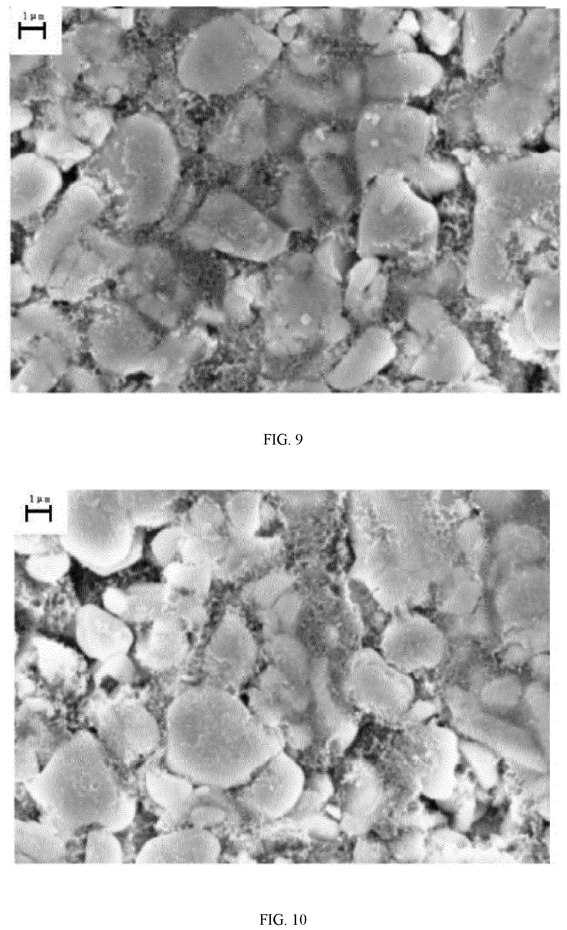

The mono-crystalline cathode material for sodium-ion battery of example 3 was thoroughly mixed with an adhesive of polyvinylidene fluoride (PVDF) and conductive carbon black (S. P) in a weight ratio of 90:5:5, stirred to form a uniform slurry, coated on an aluminium foil current collector, dried and pressed to form a pole piece. The pole piece was taken for an SEM test, as shown in fig. 9, and it can be seen from fig. 9 that the material is still mono crystal particles, and there is no crack on the surface of the material particles.

**Example 4**

According to an elemental molar ratio of Na:Mn:Ni:Fe:Ti:Y=0.77:0.22:0.47:0.09:0.215:0.05and a total weight of 2.21kg, sodium carbonate, manganese carbonate, nickel carbonate, ferric oxide, titanium oxide, and yttrium oxide were respectively weighed, and then added into an ultra-high speed multi-functional mixer to mix 40 min at a rotational speed of 2800 r/min. The uniformly mixed material was placed in a muffle furnace under an air atmosphere at a constant temperature of 940°C for 11 hours, then naturally cooled, and crushed with a jet mill at a crushing pressure of 0.65 MPa to obtain a cathode material C4 for a single crystal sodium ion battery;

The chemical formula of the mono-crystalline cathode material for sodium-ion battery C4 measured according to the composition analysis method in example 1 is $Na_{0.77}Ni_{0.47}Mn_{0.22}Fe_{0.09}Ti_{0.215}Y_{0.005}O_2$.

The cathode material was tested by the method of example 1, and the test results are shown in Table 3.

Fig. 4 is an SEM diagram of a mono-crystalline cathode material for sodium-ion battery of example 4, and it can be seen from Fig. 4 that the material is a mono crystal particle and has a polygonal shape and a lamellar shape.

The mono-crystalline cathode material for sodium-ion battery of example 4 is thoroughly mixed with an adhesive of polyvinylidene fluoride (PVDF) and conductive carbon black (S. P) in a weight ratio of 90:5:5, and stirred to form a uniform slurry which was coated on an aluminium foil current collector, dried and pressed to form a pole piece. The pole piece is taken for an SEM test, as shown in fig. 10, and it can be seen from fig. 10 that the material is still mono crystal particles, and there is no crack on the surface of the material particles.

**Example 5**

According to an elemental molar ratio of Na:Mn:Cu:Fe:Zr=0.85:0.43:0.2285:0.34:0.0015 and a total weight of 1.46kg, corresponding weights of sodium carbonate, manganese carbonate, copper oxide, ferric oxide and zirconium oxide were respectively weighed, and then added into an ultra-high speed multi-functional mixer to mix 50 min at a rotational speed of 2500 r/min. The uniformly mixed material was placed in a muffle furnace under an air atmosphere at a constant temperature of 890°C for 14 hours, then naturally cooled, and crushed with a jet mill at a crushing pressure of 0.69 MPa to obtain a mono-crystalline cathode material for sodium-ion battery C5;

The chemical formula of the mono-crystalline cathode material for sodium-ion battery C5 measured according to the composition analysis method in example 1 is $Na_{0.85}Mn_{0.43}Cu_{0.2285}Fe_{0.34}Zr_{0.0015}O_2$.

The cathode material was tested by the method of example 1, and the test results are shown in Table 3.

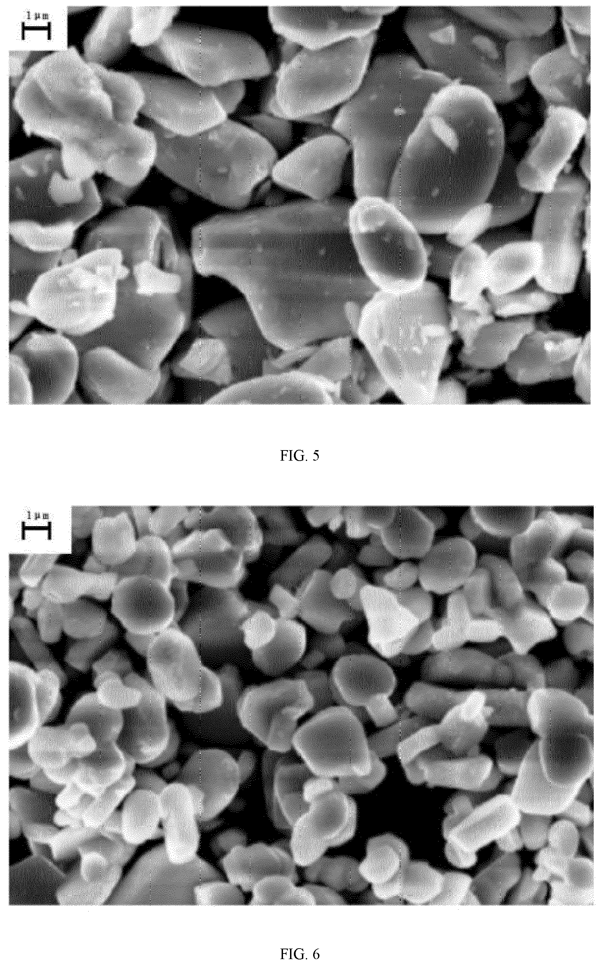

Fig. 5 is an SEM diagram of a mono-crystalline cathode material for a sodium ion battery of example 5, and it can be seen from Fig. 5 that the material is a mono crystal particle and has a polygonal shape and a lamellar shape.

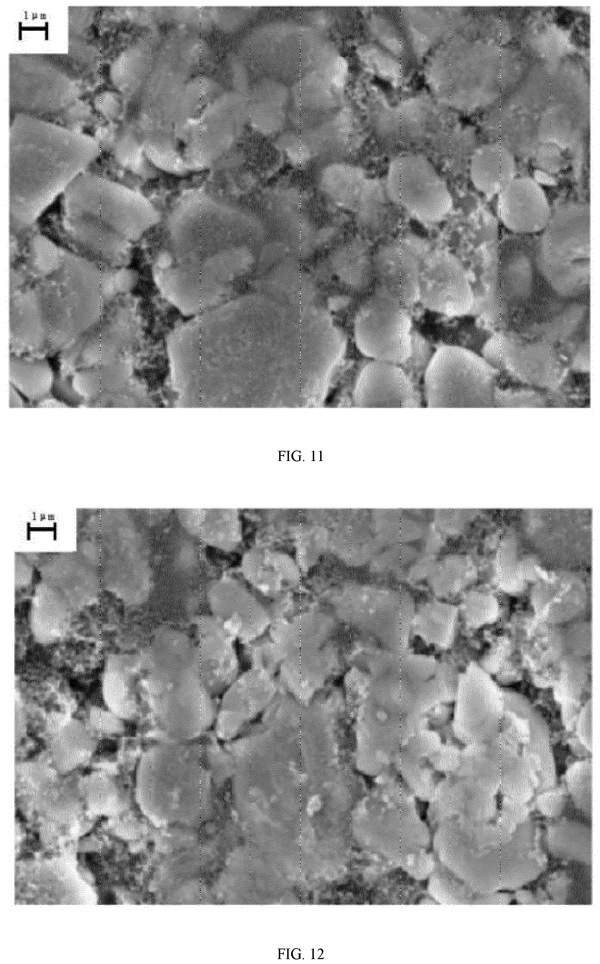

The mono-crystalline cathode material for sodium-ion battery of example 5 is thoroughly mixed with an adhesive of polyvinylidene fluoride (PVDF) and conductive carbon black (S. P) in a weight ratio of 90:5:5, stirred to form a uniform slurry, coated on an aluminium foil current collector, dried and pressed to form a pole piece The pole piece is taken for an SEM test, as shown in Fig. 11, and it can be seen from Fig. 11 that the material is still mono crystal particles, and there is no crack on the surface of the material particles.

**Example 6**

According to an elemental molar ratio of Na:Mn:Ni:Fe:Zn:Ca=0.86:0.38:0.20:0.32:0.08:0.02 and a total weight of 1.76 kg, sodium carbonate, manganese carbonate, nickel carbonate, ferrous oxalate, zinc oxide, and calcium oxide were respectively weighed and then added into an ultra-high speed multi-functional mixer to mix 35 min at a rotational speed of 3600 r/min. The uniformly mixed material was placed in a muffle furnace under an air atmosphere at a constant temperature of 935°C for 20 hours, then naturally cooled, and crushed with a jet mill at a crushing pressure of 0.66MPa to obtain a mono-crystalline cathode material for sodium-ion battery C6;

The chemical formula of the mono-crystalline cathode material for sodium-ion battery C6 measured by the composition analysis method in example 1 is $Na_{0.86}Ni_{0.29}Mn_{0.38}Fe_{0.32}Zn_{0.08}Ca_{0.02}O_2$.

The cathode material was tested by the method of example 1, and the test results are shown in Table 3.

Fig. 6 is an SEM diagram of a mono-crystalline cathode material for sodium-ion battery of example 6, and it can be seen from Fig. 6 that the material is a mono crystal particle and has a polygonal shape and a lamellar shape.

The mono-crystalline cathode material for sodium-ion battery of example 6 is thoroughly mixed with an adhesive of polyvinylidene fluoride (PVDF) and conductive carbon black (S. P) in a weight ratio of 90:5:5, stirred to form a uniform slurry, coated on an aluminium foil current collector, dried and pressed to form a pole piece, and the pole piece is taken for an SEM test, as shown in Fig. 12, and it can be seen from Fig. 12 that the material is still mono crystal particles, and there is no crack on the surface of the material particles.

**Comparative example 1**

Sodium carbonate and nickel ferromanganese precursor $(Ni_{0.27}Mn_{0.38}Fe_{0.35}(OH)_2)$ were weighed according to a molar ratio of sodium and nickel ferromanganese precursor of 0.83:1 and a total weight of 1.40kg, respectively, and then added into an ultra-high speed multifunctional mixer to mix 35min at a rotational speed of 3600 r/min. The uniformly mixed material was placed in a muffle furnace under an air atmosphere at a constant temperature of 890°C for 16 hours, then naturally cooled, and and ball-milled and sieved to obtain a finished product D1;

The chemical formula of the cathode material for sodium-ion battery D1 measured according to the composition analysis method in example 1 is $Na_{0.83}Ni_{0.27}Mn_{0.38}Fe_{0.35}O_2$.

The cathode material was tested by the method of example 1, and the test results are shown in Table 3.

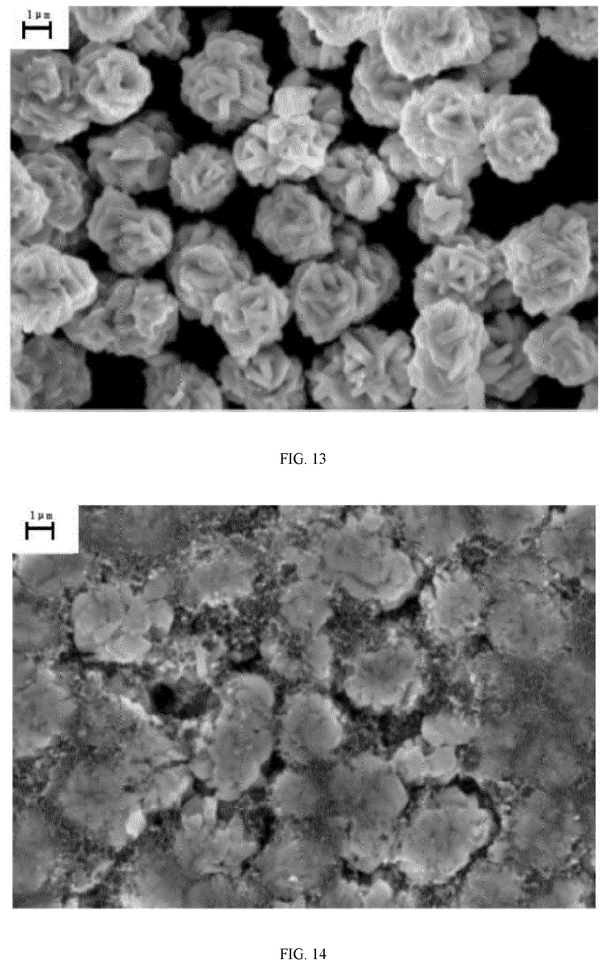

The cathode material for a sodium-ion battery of comparative example 1 was subjected to the SEM test, as shown in Fig. 13. It can be seen from Fig. 13 that the material was secondary spherical agglomerate particles formed by agglomerating a plurality of primary particles.

The cathode material for a sodium-ion battery of comparative example 1 was thoroughly mixed with an adhesive of polyvinylidene fluoride (PVDF) and conductive carbon black (S.P) in a weight ratio of 90:5:5, stirred to form a uniform slurry, coated on an aluminium foil current collector, dried and pressed to form a pole piece The pole piece was taken for an SEM test, as shown in Fig. 14, and it can be seen from Fig. 14 that the secondary spherical agglomerate particles of the material are almost completely crushed, exposing a fresh interface.

Table 3 Performance test results of the cathode materials for a sodium-ion battery in the examples and comparative examples

|  | F110 | Moisture, ppm | pH | Specific surface area, $m^2/g$ | Particle size, $\mu m$ | powder compacted density, $g/cm^3$ |
|---|---|---|---|---|---|---|
| Example 1 | 0.274 | 2369 | 12.87 | 0.66 | 10.2 | 2.95 |
| Example 2 | 0.217 | 2289 | 12.76 | 0.86 | 5.4 | 3.13 |
| Example 3 | 0.152 | 1642 | 12.64 | 0.82 | 4.3 | 3.92 |
| Example 4 | 0.198 | 2028 | 12.81 | 0.49 | 5.1 | 3.76 |
| Example 5 | 0.223 | 1933 | 12.98 | 0.45 | 12.6 | 3.07 |
| Example 6 | 0.224 | 1936 | 12.88 | 0.91 | 4.1 | 3.31 |
| Comparative example 1 | 0.347 | 4320 | 13.46 | 0.32 | 3.6 | 2.77 |

As can be seen from Table 3, in the powder X-ray diffraction spectrum (XRD) of the mono-crystalline cathode material for sodium-ion battery prepared in examples 1-6, the (110) diffraction peak having a diffraction angle 2Θ of around 64.9° has a full width at half maximum FWHM (110) of 0.152-0.274. The moisture mass content is 2400 ppm or less,. The pH is 13.1 or less. The specific surface area is 0.45-0.93 m$^2$/g. The particle size $D_V$50 is 4.1-12.6 $\mu$m, and the powder compacted density is 2.95-3.92 g/cm$^3$.

A cathode material for a sodium-ion battery prepared according to the chemical composition of comparative example 1 has a moisture mass content of 4320 ppm which is much greater than 3000 ppm. The pH is 13.46 which is greater than 13.1, and the specific surface area much smaller than that of examples of the present invention.

**Experimental example 1**

Preparation and performance evaluation of sodium-ion batteries.

CR2430 button cells were prepared as follows:

Positive preparation: the cathode material for sodium-ion battery prepared in examples 1-6 and comparative example 1 of the present invention were thoroughly mixed with an adhesive of polyvinylidene fluoride (PVDF) and conductive carbon black (S. P) in a weight ratio of 7:2:1, respectively, stirred to form a uniform slurry, coated on an aluminum foil current collector, dried and pressed to form pole pieces which is designated as PE-C1, PE-C2, PE-C3, PE-C4, PE-C5, PE-C6, and PE-D1 respectively.

Punching, weighing and baking were performed on the pressed positive sheet, and then the battery was assembled in a vacuum glove box. Firstly, the shell bottom of the button cell was placed, and foamed nickel (2.5mm) and negative metal sodium sheet were placed on the shell bottom (manufacturer: Shenzhen Youyan Technology Co. Ltd.), and 0.5g of an electrolyte was injected under an environment with a relative humidity of less than 1.5%, wherein the electrolyte was a mixed solvent of ethylene carbonate (EC), diethyl carbonate (DEC) and dimethyl carbonate (DMC) in a mass ratio of 1: 1: 1, and the electrolyte was a 1 mol/L sodium hexafluorophosphate solution. A separator and a positive sheet were placed. Secondly a shell cover of a button cell were covered and sealed to obtain a button cell of type CR2430 which is denoted as BA-C1, BA-C2, BA-C3, BA-C4, BA-C5, BA-C6, and BA-D1 respectively.

The performance test is performed on the battery test system according to the following method, and the results are shown in Table 4.

1) Capability test

The prepared button cell was attached to the test frame and the test procedure was started. Setup steps: setting the test temperature to 25°C, charging to 4.0V at a constant current of 0.1C after standing for 4 hours, suspending and standing for 5 minutes, and then discharging to 2.0V at a constant current of 0.1C to obtain the capacity at this current and voltage.

2) Cycling test

The battery subjected to the capacity test was connected to the test rack, and the test procedure was started. Setup steps: setting the test temperature to 45°C, charging to 4.0V at a constant current of 0.1C after standing for 4 hours, turning to charge at a constant voltage of 4.0V for 2 hours, standing for 5 minutes, and then discharging to a cut-off voltage of 2.0V at a constant current of 0.1C, standing for 5 minutes. The previous steps of constant current charging were repeated to perform the cycling test. It can obtain the capacity retention rate with different circulation times.

Table 4 Test results of battery performance

| Number | Cathode material | Capacity, (mAh/g) | Capacity retention rate |
|--------|------------------|-------------------|-------------------------|
| | | 4.2V-2.0V, 0.1C | 4.0V-2.0V,0.1C/0.C, after 50 cycles |
| BA-C1 | C1 | 133.0 | 91.03% |
| BA-C2 | C2 | 135.7 | 92.1% |
| BA-C3 | C3 | 137.3 | 94.24% |
| BA-C4 | C4 | 135.2 | 90.18% |
| BA-C5 | C5 | 140.0 | 90.05% |
| BA-C6 | C6 | 136.3 | 92.86% |
| BA-D1 | D1 | 129.9 | 77.64% |

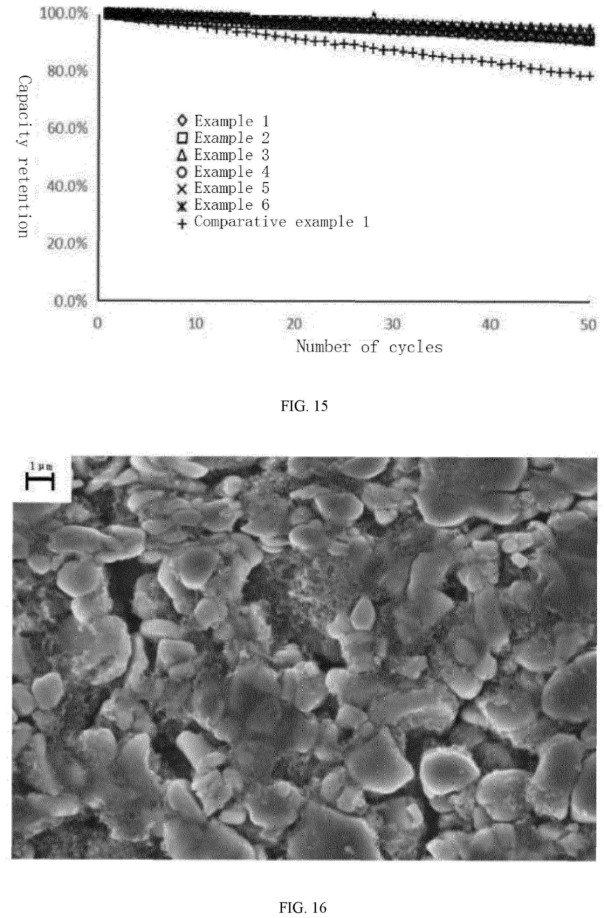

As can be seen from Table 4, the sodium ion batteries prepared using the mono-crystalline cathode material for sodium-ion battery prepared in examples 1-6 have capacities of 133.0-140 mAh/g at a current of 0.1C and a voltage of 4.2V (a cut-off voltage of 2.0V), and capacity retention rates of 90.05-94.24% after 50 cycles at 4.0V-2.0V and 0.1C/0.1C. The sodium-ion battery prepared using the cathode material for a sodium-ion battery prepared in comparative example 1 has a capacity retention rate of only 77.64% after 50 cycles at 4.0V-2.0V and 0.1C/0.1C. As can also be seen from Fig. 15, the sodium-ion batteries prepared using the mono-crystalline cathode material for sodium-ion battery prepared in examples 1-6 exhibited significantly better capacity retention rate in cycling tests than that prepared in comparative example 1.

After the cell BA-C1 was cycled for 50 times, the cell was disassembled to take the positive pole piece for SEM test. As shown in Fig. 16, it can be seen from Fig. 16 that the mono crystal particles after cycling were still intact particles without particle fragmentation.

What has been described above is merely a preferred embodiments of the invention and is not intended to limit the invention in any way. Thus, it is intended that the scope of protection of the present invention cover the modifications, equivalent replacement and improvements made in the spirit and principle of the invention shall be included in the scope of protection of the invention.

## Claims

1. A mono-crystalline cathode material for sodium-ion battery, **characterized in that** the mono-crystalline cathode material for sodium-ion battery, has a chemical composition formula of $Na_{1+a}Ni_{1-x-y-z}Mn_xFe_yM_zO_2$, wherein $-0.40 \leq a \leq 0.25$, $0.08 \leq x \leq 0.5$, $0.05 \leq y \leq 0.5$, $0 \leq z < 0.26$;
the M is one or a combination of two or more selected from the group consisting of Ti, Zn, Co, Mn, Al, Zr, Y, Ca, Li, Rb, Cs, W, Ce, Mo, Ba, Mg, Ta, Nb, V, Sc, Sr, B, F, P or Cu elements.

2. The mono-crystalline cathode material for sodium-ion battery according to claim 1, **characterized in that** $-0.33 \leq a \leq 0$, $0.10 \leq x \leq 0.5$, $0.15 \leq y \leq 0.5$.

3. The mono-crystalline cathode material for sodium-ion battery according to claim 1 or 2, **characterized in that** the M is one or a combination of two or more selected from the group consisting of Zn, Ti, Co, Al, Zr, Y, Ca, Li, Rb, Cs, W, Ce, Mo, Ba, Mg, Ta, Nb, V, Sc, Sr, B, F, P or Cu, preferably M is one or a combination of two or more selected from the group consisting of Zn, Al, B, Ti, Ca, Y, Mg, Nb, Zr or Cu; preferably, $0 \leq z \leq 0.16$.

4. The mono-crystalline cathode material for sodium-ion battery according to any one of claims 1 to 3, **characterized in that** a microscopic morphology of the mono-crystalline cathode material for sodium-ion battery under a scanning electron microscope is a mono crystal morphology; preferably, particles of the mono crystal morphology is one or a combination of two or more selected from the group consisting of spherical, spheroidal, polygonal or lamellar in shape.

5. The mono-crystalline cathode material for sodium-ion battery according to any one of claims 1 to 4, **characterized in that** the mono-crystalline cathode material for sodium-ion battery has a powder X-ray diffraction spectrum (XRD) in which a full width at half maximum (FWHM) (110) of a (110) diffraction peak having a diffraction angle $2\theta$ of around 64.9° ranges 0.06-0.35.

6. The mono-crystalline cathode material for sodium-ion battery according to any one of claims 1 to 5, **characterized in that** the mono-crystalline cathode material for sodium-ion battery has a powder compacted density of 2.8-4.2 $g/cm^3$ at a pressure of 7000-9000 kg,
and/or the mono-crystalline cathode material for sodium-ion battery has a specific surface area of 0.35-1.2$m^2$/g.

7. The mono-crystalline cathode material for sodium-ion battery according to any one of claims 1 to 6, **characterized in that** the mono-crystalline cathode material for sodium-ion battery has a moisture mass content of less than 3000 ppm, preferably less than 2800 ppm, more preferably less than 2500 ppm,
and/or a pH of the mono-crystalline cathode material for sodium-ion battery is within 13.1, preferably within 13.0.

8. The mono-crystalline cathode material for sodium-ion battery according to any one of claims 1 to 7, **characterized in that** the mono-crystalline cathode material for sodium-ion battery has a particle size $D_V50$ of 2.0-16.0$\mu$m, preferably 4.0-13.0$\mu$m.

9. A preparation method of a mono-crystalline cathode material for sodium-ion battery according to any one of claims 1 to 8, **characterized by** comprising the following steps: mixing raw materials comprising a sodium source compound, an iron source compound and a manganese source compound, and adding a nickel source compound and/or an M source compound according to needs, sintering and crushing to obtain the mono-crystalline cathode material for sodium-ion battery.

10. The preparation method according to claim 9, **characterized in that** a temperature of the sintering is 860-990°C, preferably 880-980°C; preferably, a constant temperature time is 6-40 hours, and/or, the crushing pressure is 0.1-1MPa.

11. The preparation method according to claim 9 or 10, **characterized in that** the sodium source compound comprises a sodium element-containing salt and/or hydroxide; preferably, the sodium source compound is one or a combination of two or more selected from the group consisting of sodium carbonate, sodium formate, sodium hydroxide, sodium acetate, sodium chloride and sodium fluoride,

and/or the manganese source compound comprises one or a combination of two or more selected from the group consisting of an oxide, a hydroxide, or a salt containing a manganese element; preferably, the manganese source compound is one or a combination of two or more selected from the group consisting of manganese trioxide, manganese tetroxide, manganese oxide, manganese carbonate, manganese oxalate, manganese sulfate, manganese acetate, manganese chloride and manganese nitrate,
and/or the nickel source compound comprises one or a combination of two or more selected from the group consisting of an oxide, a hydroxide or a salt containing a nickel element; preferably, the nickel source compound is one or a combination of two or more selected from the group consisting of nickel carbonate, nickel oxalate, nickel sulfate, nickel acetate, nickel chloride and nickel nitrate, and/or the iron source compound comprises one or a combination of two or more selected from the group consisting of an oxide, a hydroxide or a salt containing an iron element; preferably, the iron source compound is one or a combination of two or more selected from the group consisting of ferric oxide, ferrous oxalate, ferric sulfate, ferric acetate, ferrous sulfate, ferrous acetate, ferrous nitrate and ferric nitrate,
and/or the M source compound comprises an M element-containing oxide and/or salt; preferably, the M source compound is one or a combination of two or more selected from the group consisting of calcium oxide, calcium hydroxide, boron trioxide, boric acid, niobium pentoxide, aluminum oxide, aluminum nitrate, aluminum acetate, titanium oxide, metatitanic acid, magnesium oxide, magnesium acetate, copper oxide, yttrium trioxide, zirconium oxide, zirconium oxychloride, zirconium acetate, sodium fluoride, lithium fluoride, zinc oxide, and copper sulfate.

12. A mono-crystalline cathode material for sodium-ion battery, **characterized by** being obtained by the preparation method according to any one of claims 9 to 11.

13. A positive electrode for a sodium-ion battery, an active substance of which is the mono-crystalline cathode material for sodium-ion battery according to any one of claims 1 to 8 or claim 12.

14. A sodium-ion battery, **characterized by** comprising the positive electrode for a sodium-ion battery of claim 13.

15. An application of the mono-crystalline cathode material for sodium-ion battery according to any one of claims 1-8 or claim 12, or the positive for a sodium-ion battery according to claim 13, or the sodium-ion battery according to claim 14 in solar power generation, wind power generation, smart grids, distributed power stations, household energy storage batteries, low-end two-wheeled vehicle batteries or low energy density power batteries.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

Europäisches
Patentamt

European
Patent Office

Office européen
des brevets

# EUROPEAN SEARCH REPORT

Application Number

EP 23 18 5369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/037660 A1 (ZHU JINYOU [CN] ET AL) 3 February 2022 (2022-02-03) * examples; tables * ----- | 1-15 | INV. C01G53/00 C01G45/00 C01G45/12 |
| X | US 2021/336262 A1 (LIU QIAN [CN] ET AL) 28 October 2021 (2021-10-28) * page 2 - pages 4,6; claims; examples * ----- | 1-15 | C01G49/00 H01M4/00 |

**TECHNICAL FIELDS SEARCHED (IPC)**

C01G
H01M

The present search report has been drawn up for all claims

| Place of search | Date of completion of the search | Examiner |
|---|---|---|
| Munich | 14 December 2023 | Doslik, Natasa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 5369**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-12-2023**

| Patent document cited in search report | | Publication date | Patent family member(s) | | Publication date |
|---|---|---|---|---|---|
| US 2022037660 | A1 | 03-02-2022 | CN | 111554919 A | 18-08-2020 |
| | | | EP | 3907795 A1 | 10-11-2021 |
| | | | US | 2022037660 A1 | 03-02-2022 |
| | | | WO | 2020164364 A1 | 20-08-2020 |
| US 2021336262 | A1 | 28-10-2021 | CN | 111435741 A | 21-07-2020 |
| | | | CN | 115472818 A | 13-12-2022 |
| | | | CN | 115472819 A | 13-12-2022 |
| | | | CN | 115498177 A | 20-12-2022 |
| | | | EP | 3907793 A1 | 10-11-2021 |
| | | | US | 2021336262 A1 | 28-10-2021 |
| | | | WO | 2020143533 A1 | 16-07-2020 |

EPO FORM P0459

For more details about this annex : see Official Journal of the European Patent Office, No. 12/82